# DEMANDE DE BREVET EUROPEEN

(11) **EP 2 940 375 A1**
(43) Date de publication de la demande: **04.11.2015**
(21) Numéro de dépôt: 15163398.9
(22) Date de dépôt: 13.04.2015
(51) Int. Cl.: F21S 8/10, F21V 23/00, F21V 25/00

(54) **DISPOSITIF D'ATTÉNUATION DE PERTURBATIONS ÉLECTROMAGNÉTIQUES, ET MODULE LUMINEUX DE VÉHICULE AUTOMOBILE ÉQUIPÉ D'UN TEL DISPOSITIF**

(30) Priorité: 28.04.2014 FR 1453838
(71) Demandeur: Valeo Vision Belgique, 7822 Meslin l'Evêque (BE)
(72) Inventeur: Dinant, Franck, 1460 VIRGINAL (BE); Debert, Florestan, 59310 NOMAIN (FR); Jaaidane, Mohamed, 78130 LES MUREAUX (FR); Sacchet, Dirkie, 7190 ECAUSSINNES (BE); Boudikian, David, 75013 PARIS (FR); Duarte, Marc, 93250 VILLEMOMBLE (FR)

(57) **Abrégé**

L'invention concerne un dispositif d'atténuation de perturbations électromagnétiques dégagées par au moins un composant électronique, disposé sur une carte de circuits imprimés (33) montée sur une première face (31) d'un support de carte (12) et porteuse d'au moins une diode électroluminescente pilotée par le au moins un composant électronique pour l'émission de rayons lumineux.

Une cage de confinement est disposée autour d'au moins ledit composant électronique, elle est formée partiellement par des parois venues de matière avec ladite première face et sur lesquelles repose la carte de circuits imprimés, de manière à délimiter une zone de confinement des ondes.

La zone de confinement présente une ouverture (74), selon une première direction, apte à être obturée ou non par une pièce de fermeture (34, 80) distincte desdites parois.

L'invention concerne en outre un module lumineux équipé d'un tel dispositif, et un véhicule automobile comportant un module lumineux selon l'invention.

## Description

La présente invention concerne un dispositif d'atténuation de perturbations électromagnétiques, et elle concerne plus particulièrement l'application d'un tel dispositif dans un module lumineux comportant une diode électroluminescente.

Dans ce type de modules, on utilise de plus en plus fréquemment des diodes électroluminescentes pour l'émission de rayons lumineux afin de réaliser une fonction d'éclairage et/ou de signalisation d'un véhicule automobile. L'utilisation de ces diodes permet notamment de focaliser le rayon lumineux émis et permet dans un encombrement faible, associé à des moyens de déviation optique, de diriger facilement le rayon lumineux en sortie du module lumineux selon une direction souhaitée.

On associe de façon classique des moyens de refroidissement thermique à ce type de modules lumineux équipés d'une diode électroluminescente, puisque cette diode est portée par une carte de circuits imprimés portant également des composants électroniques pour réaliser l'alimentation et le pilotage de la diode. Ces composants doivent être refroidis pour leur bon fonctionnement ponctuel et leur tenue dans le temps.

Certains de ces composants électroniques, par exemple un convertisseur DC/DC, génèrent des perturbations électromagnétiques, et il convient d'empêcher leur diffusion à l'extérieur du module pour éviter qu'elles ne gênent d'autres appareillages électroniques présents dans le véhicule. A cet effet, on connaît l'utilisation de cage métallique, jouant le rôle de cage de Faraday, que l'on vient positionner en recouvrement de la carte de circuits imprimés. Ces cages métalliques peuvent être coûteuses, et elles présentent une conception figée par les constructeurs de ces cages qui peut impacter la conception et l'agencement des composants électroniques sur la carte de circuits imprimés.

La présente invention s'inscrit dans ce contexte, en cherchant à proposer un dispositif d'atténuation de perturbations électromagnétiques qui ne présentent pas les inconvénients précédemment cités, et qui soit particulièrement simple à mettre en oeuvre et adaptable à différentes configurations de modules.

La présente invention propose un dispositif d'atténuation de perturbations électromagnétiques dégagées par au moins un composant électronique, disposé sur une carte de circuits imprimés qui est montée sur une première face d'un support de carte et qui est porteuse d'au moins une diode électroluminescente pilotée par le au moins un composant électronique pour l'émission de rayons lumineux, ledit dispositif comportant une cage de confinement des ondes électromagnétiques disposée autour d'au moins ledit composant électronique. Selon l'invention, la cage est formée partiellement par des parois venues de matière avec ladite première face du support de carte et sur lesquelles repose la carte de circuits imprimés, de manière à délimiter dans ledit support de carte et sur la carte de circuits imprimés une zone de confinement des ondes. Et la zone de confinement présente une ouverture, selon une première direction, apte à être obturée, selon les besoins d'atténuation du dispositif, par une pièce de fermeture distincte desdites parois.

Ainsi, on propose un dispositif d'atténuation qui est facilement réalisable, notamment formé par un moulage spécifique. Cela permet par exemple de former le support en le moulant de manière à former un capot ou un radiateur, par ailleurs prévu pour le refroidissement général de la source de lumière, voire en le moulant de manière à former un radiateur formant lui-même un capot.

Le dispositif selon l'invention permet de prévoir dans le logement apte à recevoir les composants électroniques une ouverture qui permet de s'adapter aux différents cas dans lequel le dispositif d'atténuation est implanté. À titre d'exemple, selon la position du module dans le véhicule automobile dans son ensemble, on pourra ou non prendre en considération les perturbations électromagnétique, et se passer de l'élément rapporté si les perturbations électromagnétiques sont jugées insignifiantes. On économise alors de la matière, d'où un gain de poids, et on favorise une ouverture permettant le refroidissement par ventilation des composants électroniques et de la carte de circuits imprimés. Dans le cas où, sur un véhicule différent, les perturbations électromagnétiques doivent être prises en considération car le module est plus proche de l'habitacle, on pourra prévoir de fermer le logement et les composants électroniques par l'élément rapporté.

Le dispositif selon l'invention peut comprendre une ou plusieurs des caractéristiques suivantes :
- la ou les diodes sont pilotées par plusieurs composants, l'ensemble de ces composants étant confinés dans ladite cage ;
- le composant électronique pilotant ladite diode électroluminescente est un composant d'un convertisseur de tension ; selon une réalisation de l'invention ce convertisseur est un convertisseur DC/DC, notamment un convertisseur à découpage ; selon une réalisation de l'invention, la conversion de tension est réalisée par plusieurs composants, ces composants étant tous logés dans ladite cage, les composants ne participant pas à cette conversion, par exemple des composant de protection du convertisseur contre le bruit électromagnétique ou les surtensions, pouvant être logés à l'extérieur de la cage ;
- les parois de confinement comportent deux parois latérales sensiblement parallèles et une paroi transversale les reliant à une extrémité longitudinale, délimitant entre elles la zone de confinement avec l'ouverture qui peut s'étendre sensiblement parallèlement à la paroi transversale ;
- la paroi transversale présente une extrémité libre sensiblement plane sur laquelle la carte de circuits imprimés vient en appui de sorte qu'elle s'étend de part et d'autre de la paroi transversale ;
- la carte porte une pluralité de composants électroniques qui sont répartis, en fonction de leur capacité à produire des perturbations électromagnétiques, de part et d'autre de ladite paroi transversale ;
- les parois latérales présentent une extrémité libre telle qu'un muret prolonge le côté de la paroi latérale opposée à la zone de confinement, en formant un siège de réception d'une extrémité latérale de la carte de circuits imprimés ;
- le support de carte est creusé au moins dans la zone de confinement, de sorte qu'une bordure s'étende le long de l'ouverture de ladite zone de confinement ; la paroi de fond de la zone de confinement comporte une paroi additionnelle qui s'étend en regard de la bordure délimitant l'ouverture, de sorte qu'une rigole court le long de la bordure entre celle-ci et la paroi additionnelle ; chaque paroi latérale de confinement présente à son extrémité tournée vers ladite ouverture une chicane allant dans le sens de l'éloignement de la paroi latérale opposée et en ce que la rigole s'étend jusqu'à la dite chicane.

Selon d'autres caractéristiques de l'invention, la diode est disposée sur une face externe de la carte de circuits imprimés, tournée à l'opposé du support de carte, tandis que le au moins un composant électronique est disposé sur la face interne de la carte, tournée vers le support de carte, de manière à être logé dans la zone de confinement. Et le support de carte peut porter sur sa face externe des moyens de refroidissement thermique.

Le support de carte peut être, selon différents modes de réalisation de l'invention, intégré dans le carter support, ou bien, tel que cela sera décrit plus en détails ci-après, être formé par un capot de fermeture d'un logement aménagé dans le carter support.

L'invention concerne également un module lumineux pour l'éclairage et/ou la signalisation d'un véhicule automobile, du type comportant au moins une diode électroluminescente apte à émettre des rayons lumineux vers des moyens de déviation optique pour que ces rayons soient dirigés vers une face de sortie du module, ledit module comportant une carte de circuits imprimés sur laquelle est rapportée la au moins une diode électroluminescente ainsi qu'au moins un composant électronique pour le pilotage du fonctionnement de ladite au moins une diode. Le module selon l'invention comporte d'une part un carter support dans lequel une cavité est aménagée pour loger la carte de circuits imprimés pour le bon positionnement de la diode, et d'autre part un support de carte apte à porter ladite carte de circuits imprimés. Le module comporte un dispositif d'atténuation des perturbations électromagnétiques générées par ledit au moins un composant électronique, ledit dispositif d'atténuation comportant une cage formée partiellement par des parois venues de matière avec la face interne dudit support de carte et comportant une ouverture réalisée selon une première direction.

Une pièce de fermeture peut obturer ladite ouverture. Tandis que les parois sont venues de matière avec le support de carte, la pièce de fermeture est distincte de ces parois.

Selon une réalisation de l'invention, la pièce de fermeture est faite d'un matériau métallique. Cela permet de renforcer l'atténuation des perturbations électromagnétiques générées par ledit au moins un composant électronique.

Selon une réalisation avantageuse, la pièce de fermeture est connectée électriquement à une surface métallique du réflecteur. Cela renforce davantage l'atténuation par ladite pièce de fermeture des perturbations électromagnétiques générées par ledit au moins un composant électronique. Cette surface métallique du réflecteur peut être une surface réfléchissante du réflecteur, notamment celle destinée à renvoyer les rayons lumineux provenant de la source lumineuse du module lumineux. Cette surface peut par exemple être une couche métallique déposée sur un matériau, notamment par aluminiage.

Selon des caractéristiques propres à un mode de réalisation de l'invention, la pièce de fermeture est un élément rapporté sur la carte de circuits imprimés de manière à s'étendre entre la carte et le support de carte. La pièce de fermeture est alors adaptée à être fixée à une première extrémité à la carte de circuits imprimés et à être logée à l'autre extrémité dans une rigole formée dans le support de carte.

Le support de carte est par ailleurs creusé de sorte qu'il forme un logement pour le au moins un composant électronique de pilotage du fonctionnement de la au moins une diode électroluminescente, et la rigole est formée par une bordure du logement et une paroi additionnelle qui s'étend sensiblement parallèlement à cette bordure. La rigole forme avantageusement une chicane bloquant le trajet des ondes électromagnétiques.

On prévoira que la hauteur de la pièce de fermeture est telle que cette pièce de fermeture s'étende dans la rigole sans contact avec la paroi de fond de la rigole. Ainsi, on laisse un passage d'air entre la pièce de fermeture et la rigole pour l'aération des composants électroniques présents dans la zone de confinement.

Selon des caractéristiques de l'invention, ladite pièce de fermeture comporte des bossages, qui s'étendent en saillie du plan de la pièce sensiblement au voisinage de l'extrémité apte à être logée dans la rigole. Elle peut prendre la forme d'une pièce de tôle pliée, et cette pièce peut comporter des languettes qui prolongent, dans le plan de la pièce, le bord de la pièce apte à être au contact de la carte de circuits imprimés, lesdites languettes étant aptes à coopérer avec des lumières formées dans la carte de circuits imprimés. Ces languettes peuvent être par exemple connectées électriquement à une surface métallique du réflecteur, comme évoqué ci-dessus.

Avantageusement, la pièce de tôle pliée est réalisée en acier inoxydable, ce choix de matériau permettant d'une part une bonne flexibilité de la pièce pour un pliage facile des languettes après que celles-ci soient passées à travers les lumières et pour la déformation des bossages dans la rigole, et permettant d'autre part d'empêcher l'oxydation de la pièce de fermeture.

Dans une variante de réalisation, on pourra prévoir que la pièce de fermeture est une paroi venue de matière avec le carter support du réflecteur. Par exemple, la pièce de fermeture est un prolongement du carter support et elle est formée par un matériau revêtu d'une couche métallique, par exemple par aluminiage. Selon une réalisation de l'invention, cette pièce est alors connectée électriquement au support de carte, notamment lorsque le support est un radiateur en métal. Cette connexion est réalisée par un moyen de contact, par exemple une lame métallique. Le carter support et le réflecteur peuvent être venus de matière en une seule pièce. Ainsi la pièce de fermeture et le réflecteur peuvent par exemple être aluminés en même temps lors de leur fabrication.

Selon d'autres caractéristiques de l'invention :
- l'ouverture est tournée dans le même sens que celui d'émission de la lumière par ledit module lumineux ;
- le dispositif d'atténuation des perturbations électromagnétiques est un dispositif tel qu'il vient d'être décrit précédemment ;
- le support de carte est un capot permettant de fermer ledit carter ; le carter peut être le boîtier dudit module, le boîtier comprenant un premier orifice fermé par une glace de fermeture formant ladite face de sortie du module, et un deuxième orifice fermé par ledit support ;
- le carter comporte une paroi interne constituant une paroi réfléchissante, lesdits moyens de déviation optiques comprenant ladite paroi réfléchissante ou étant constitués par ladite paroi réfléchissante.

L'invention concerne également un véhicule automobile comportant au moins un module lumineux tel qu'il vient d'être présenté succinctement et tel qu'il sera détaillé ci-après. Notamment, dans le véhicule automobile selon l'invention, on privilégie une orientation spécifique du module pour que l'ouverture de la zone de confinement soit tournée à l'opposé de l'habitacle du véhicule.

D'autres caractéristiques et avantages de l'invention apparaîtront à la lecture de la description détaillée d'un mode de réalisation qui va suivre et pour la compréhension de laquelle on se reportera aux figures annexées parmi lesquelles :
- la figure 1 est une vue en coupe d'un réflecteur d'un module lumineux selon l'invention, sur laquelle des moyens de déviation optiques sont représentés partiellement, recouverts par un carter support et un capot associé ;
- la figure 2 est une vue en perspective, sur le dessus, du carter support et du capot illustré sur la figure 1 ;
- la figure 3 est une vue semblable à la figure 2 avec le carter support seul ;
- la figure 4 est une vue semblable à la figure 2 avec le capot seul ;
- la figure 5 est une vue du capot de la figure 4, vue en perspective, cette fois depuis le dessous, une carte de circuits imprimés et un élément rapporté étant également représentés ;
- la figure 6 est une vue du capot et de l'élément rapporté de la figure 5, sous un angle légèrement différent, la carte de circuits imprimés ayant été supprimée pour rendre visible la face interne du capot ;
- la figure 7 est une vue similaire à la figure 5, dans laquelle le capot a été retiré pour ne laisser visible que la carte de circuits imprimés et l'élément rapporté ;
- la figure 8 est une vue en perspective de la pièce rapportée, dans la même orientation que celle de la figure 7 ;
- les figures 9 et 10 sont des figures similaires aux figures 5 et 6, sans élément rapporté ;
- les figures 11 et 12 sont des vues, respectivement en coupe et en perspective, d'une variante de réalisation dans laquelle l'élément rapporté est remplacé par une paroi venue de matière avec le carter support ; et
- la figure 13 est une vue en coupe d'une autre variante de réalisation dans laquelle l'élément rapporté porte une languette spécifique pour le contact électrique avec une surface du réflecteur.

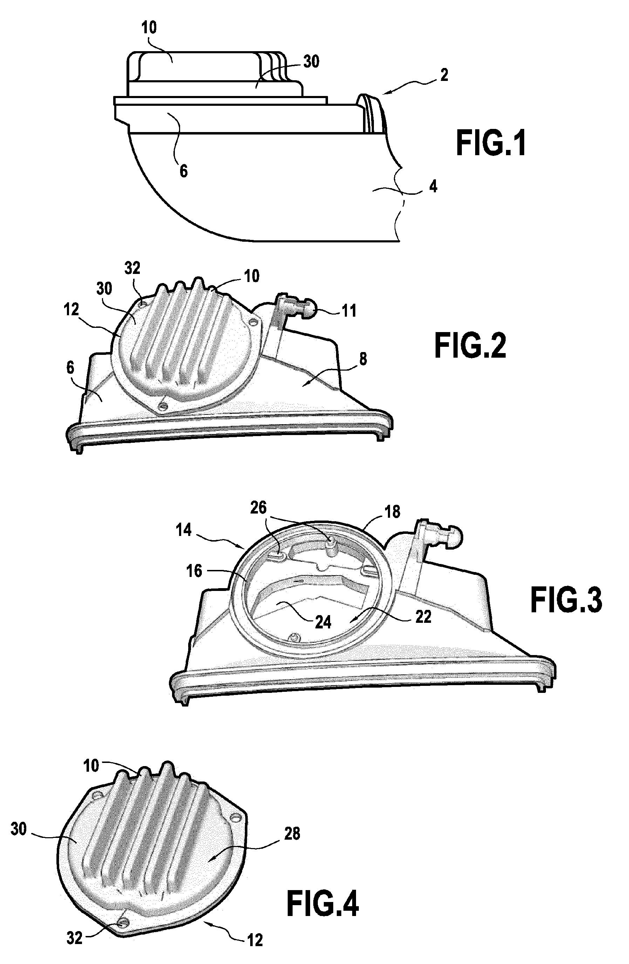

Un module lumineux comporte notamment un réflecteur en regard duquel est placée une diode électroluminescente portée par une carte de circuits imprimés. Le réflecteur 2 présente d'une part des moyens de déviation optique 4 (visibles sur la figure 1), présentant avantageusement une forme sensiblement elliptique, pour dévier les rayons lumineux émis par la diode vers une face de sortie du module ici non représentée, et d'autre part un carter support 6 qui recouvre l'extrémité supérieure des moyens de déviation optique, rendus solidaires du carter. Le carter support 6 prend sensiblement la forme d'une paroi plane de recouvrement, qui présente sur une face externe 8, tournée à l'opposé des moyens de déviation optiques, des moyens d'échange thermique 10, et qui présente des moyens de fixation 11 à un bâti du module.

Tel qu'illustré sur les figures, les moyens d'échange thermiques sont formés sur une face externe d'un capot 12, disposé dans un logement 14 (visible sur la figure 3) formé dans la paroi de recouvrement du carter support, par des nervures venant en saillie du capot à l'opposé de la paroi de recouvrement.

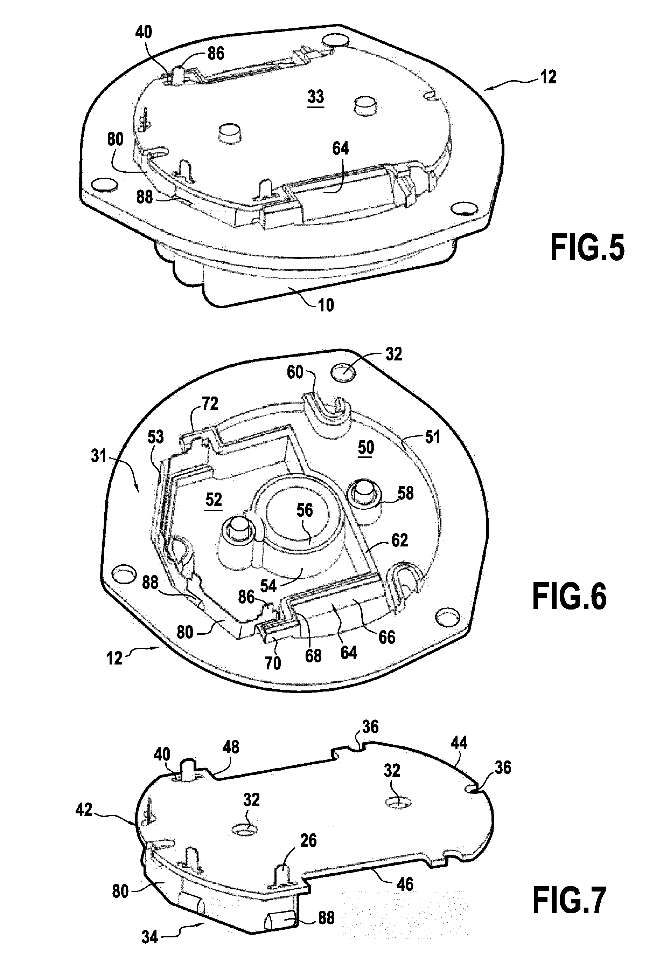

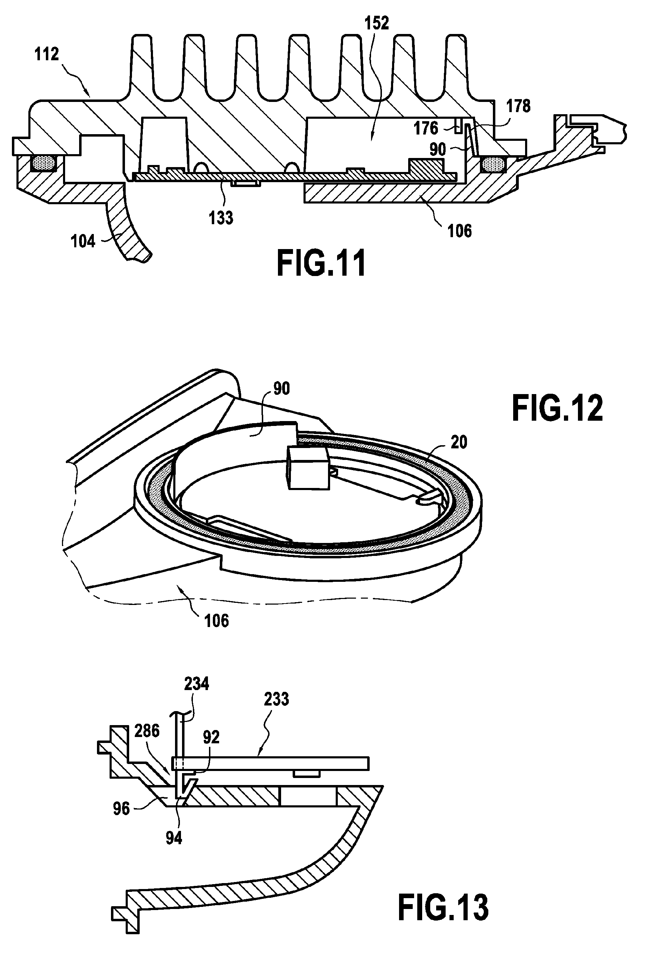

Le logement présente deux parois annulaires concentriques 16, 18, entre lesquelles vient se loger un joint d'étanchéité 20, seulement visible sur la figure 12 et compressé lorsque le capot est rapporté contre le carter support, et une cavité 22 aménagée à l'intérieur de la paroi annulaire intérieure 16. La cavité présente un trou 24 traversant la paroi de recouvrement, de manière à permettre le passage des rayons lumineux émis par la diode électroluminescente, tel que cela sera décrit ci-après, et des plots d'indexage 26 pour permettre la mise en position correcte de la carte de circuits imprimés porteuse de cette diode électroluminescente. Le trou 24 s'étend transversalement, de manière à permettre la diffusion transversale des rayons émis par la diode sur toute la dimension transversale des moyens de déviation optique après que ces rayons aient traversé la paroi de recouvrement du carter support. Dans l'exemple illustré, quatre plots d'indexage ont été prévus et on prévoit des formes complémentaires sur le capot que l'on vient plaquer sur le logement, et éventuellement sur la carte de circuits imprimés portée par le capot, tel que cela est visible sur la figure 5.

Le capot est illustré en figure 4 vu de dessus, c'est-à-dire avec la face externe 28, porteuse des nervures d'échange thermique, qui est visible. Le capot présente sur cette face externe une surépaisseur centrale 30, apte à permettre un évidement conséquent de la face interne 31 opposée pour le logement de la carte de circuits imprimés. Le capot comporte en outre des alésages de fixation 32 au carter support, de manière à assurer la fixation du capot sur carter support par l'intermédiaire de moyens de vissage non représentés.

On décrit un premier mode de réalisation, illustré sur les figures 5 à 8, dans lequel une carte de circuits imprimés 33 est rapportée sur la face interne 31 du capot visible sur ces figures, avec un élément rapporté 34 qui vient fermer une ouverture laissée entre la plaque et le capot.

La carte de circuits imprimés 33 consiste en une plaque sur laquelle est soudée la diode électroluminescente ainsi que des composants électroniques pour le pilotage du fonctionnement de la diode, en fonction d'instructions de commande reçus par un module associé à la diode. Lorsque la carte de circuits imprimés 33 est rapportée sur la face interne 31 du capot, on comprend que la diode est soudée sur la face externe de la carte, à l'opposé du capot 12 pour pouvoir émettre des rayons lumineux vers les moyens de déviation optique 4 à travers le trou traversant 24, tandis que les composants électroniques sont soudés sur la face interne de la carte, tournés vers le capot 12.

Les composants électroniques sont soudés sur la plaque, et l'on peut avantageusement disposer ces composants sur la plaque en fonction de leur potentiel de génération d'ondes électromagnétiques. On pourra ainsi placer les gros pourvoyeurs de perturbations électromagnétiques, comme par exemple un convertisseur de tension continue DC/DC, dans une zone précise de la plaque pour s'assurer de leur placement dans la cage de confinement d'ondes tel qu'elle va être décrite ci-après. Des composants électroniques ne créant pas ou peu de perturbations électromagnétiques peuvent eux être disposés indifféremment sur la plaque.

La plaque présente sur son pourtour des encoches 36 aptes à coopérer avec les plots d'indexage 26 aménagés sur le carter support 6, et elle présente en son centre des alésages 38 aptes à coopérer avec des futs d'indexage aménagés cette fois sur la face interne du capot, tel que cela va être décrit ci-après. La plaque comporte également des lumières 40 aménagées régulièrement à proximité d'un bord longitudinal avant 42 de la carte de circuits imprimés, aptes à coopérer avec des languettes portées par l'élément rapporté 34. Ici, on prévoit quatre de ces lumières.

Dans l'exemple illustré, la plaque présente à chaque extrémité longitudinale des bords arrondis 44 et, d'une extrémité longitudinale à l'autre, deux bords latéraux 46 parallèles délimités longitudinalement par des bords transversaux 48 qui prolongent perpendiculairement ces bords latéraux vers l'extérieur de la plaque.

Tel que cela est particulièrement visible sur la figure 6, la face interne 31 du capot est évidée pour former un logement et elle présente des éléments en saillie apte à former une cage de confinement des ondes électromagnétiques générées par les composants électroniques.

L'évidement de la face interne comporte deux zones séparées sensiblement transversalement par des parois de confinement. Une première zone 50 est délimitée par ces parois et par une bordure circulaire 51 et une deuxième zone, formant la zone de confinement 52, est délimitée par ces parois et par une bordure 53 formée par des segments de droite.

La face interne 31 du capot comporte, à l'intérieur de ces parois délimitant le logement, un canon central 54, avec une rigole 56 sur le pourtour pour éviter que de la patte thermique déborde au montage de la carte de circuits imprimés sur la capot. Une patte thermique est en effet placée sur le sommet du canon apte à être en contact avec la carte de circuits imprimés au montage, pour faciliter la transmission de la chaleur émise par la diode vers le capot et ses moyens de refroidissement thermique.

La face interne 31 du capot porte également deux fûts d'indexage 58 longitudinalement disposés de part et d'autre du canon central 54, et des moyens d'indexage 60 complémentaires de ceux formés sur le carter support 6 pour enserrer la carte de circuits imprimés 33.

Tel que cela a été décrit précédemment, la face interne du capot présente des parois qui s'étendent en saillie de la paroi de fond du logement pour délimiter la première zone 50 et la zone de confinement 52. Une première paroi transversale 62 s'étend sensiblement en travers du logement. Son extrémité libre à l'opposé du capot présente une surface plane, pour servir de support à la carte de circuits imprimés. La paroi transversale est prolongée perpendiculairement par des parois latérales 64 qui se raccordent respectivement à l'une des extrémités latérales de la paroi transversale. Ces parois latérales présentent une partie principale 66, qui s'étend longitudinalement dans la continuité de la paroi transversale, et une chicane formée d'une paroi intermédiaire 68 qui s'étend transversalement à la partie principale et d'une paroi terminale 70 sensiblement parallèle à la partie principale.

Tel que cela est visible sur la figure 6, sur laquelle la carte de circuits imprimés n'a pas été représentée, les parois latérales 64, contrairement à la paroi transversale 62, ne présentent pas une surface plane à leur extrémité libre, mais un muret 72 disposé sur le côté opposé à la zone de confinement et qui forme une butée à la mise en place de la carte de circuits imprimés sur les parois latérales.

Ainsi, lorsque la carte de circuits imprimés est en place sur le capot, comme illustré sur la figure 5, la carte repose sur la face plane de la paroi transversale de sorte qu'elle s'étend de part et d'autre de cette paroi transversale, tandis qu'elle repose sur les parois latérales avec les murets qui l'entourent.

Les parois latérales 64 sont tronquées à l'extrémité de la chicane, de sorte qu'elles ne se rejoignent pas l'une et l'autre, et que l'on laisse ainsi une ouverture 74 à une extrémité longitudinale avant de la zone de confinement, entre les parois latérales, au niveau de la bordure 53 formée par des segments de droite.

On définit ici une extrémité longitudinale avant et arrière en fonction de l'implantation dans le véhicule. Tel que cela sera expliqué ci-après, l'orientation choisie ici est particulièrement intéressante en ce que l'ouverture est dirigée à l'opposé de l'habitacle, de sorte que d'éventuelles fuites d'ondes électromagnétiques seraient sans conséquences. On comprendra toutefois que l'orientation de l'ensemble pourrait changer sans sortir du contexte de l'invention.

La paroi de fond du logement est une surface plane, sur l'une comme sur l'autre des zones délimitées par les bords et les parois de confinement. On observe sur la figure 6 qu'une paroi additionnelle 76 s'étend en saillie de la paroi de fond, en regard de la bordure 53 formée par les segments de droite. La paroi additionnelle 76 présente une hauteur moindre de celle de la bordure 53 et elle est également formée par des segments de droite pour s'étendre parallèlement à ce bord. On forme ainsi une rigole 78 entre la bordure du logement et la paroi additionnelle, dans laquelle l'élément rapporté 34 est apte à venir prendre place.

On peut observer sur la figure 6 que la paroi additionnelle et la rigole associée s'étendent au pied de la chicane formée par les parois latérales de confinement 64, de sorte que l'on crée une zone de recouvrement entre la rigole et les parois.

Tel que cela est le cas dans le mode de réalisation illustré, la profondeur de la cage de confinement formée dans le logement d'un côté des parois de confinement peut être supérieure à celle du logement de l'autre côté des parois de confinement. On pourra ainsi loger des composants électroniques plus volumineux.

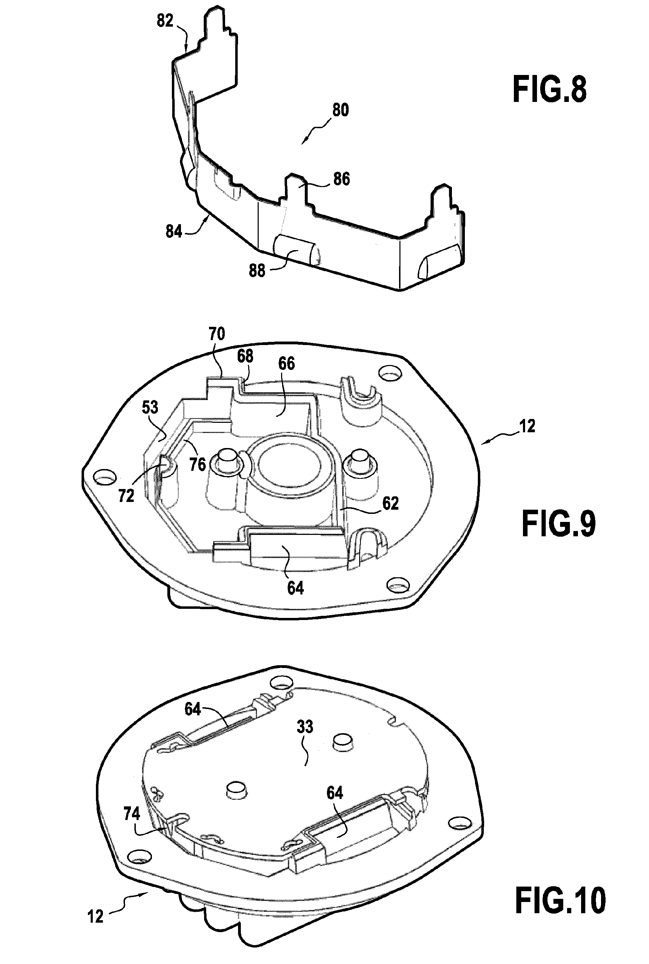

Tel qu'elle cela vient d'être décrit, la cage de confinement 52 des ondes électromagnétiques réalisée dans le module lumineux selon l'invention est spécifique en ce qu'elle présente une ouverture 74 selon une première direction axiale. On a représenté sur les figures 5 à 8, un premier mode d'utilisation, dans lequel un élément rapporté 34, disposé entre le capot 12 et la carte de circuits imprimés 33, joue le rôle d'une pièce de fermeture apte à bloquer cette ouverture, et on a représenté sur les figures 9 et 10, l'alternative, à savoir un deuxième mode d'utilisation dans lequel l'ouverture axiale 74 est laissée et n'est pas bouchée par un élément rapporté.

Selon une réalisation de l'invention, l'élément rapporté jouant le rôle de pièce de fermeture est fait d'un matériau métallique. Cela permet de renforcer l'atténuation des perturbations électromagnétiques générées par ledit au moins un composant électronique.

Dans le premier mode d'utilisation, l'élément rapporté prend la forme d'une pièce de tôle pliée 80, visible notamment sur la figure 8. La pièce est pliée pour prendre une forme de portions droites successives, complémentaire à celle de la rigole 78 formée à l'extrémité axiale de la zone de confinement 52. Sur la longueur de la pièce, un premier bord 82 porte des moyens de fixation et un deuxième bord 84 est droit. Ici, l'élément rapporté est rendu solidaire de la plaque.

Les moyens de fixation prennent la forme de languettes 86, chaque languette s'étendant en saillie du premier bord 82, dans le plan de la portion droite de la pièce qu'elle prolonge.

La pièce de tôle pliée comporte en outre des bossages 88 formés en saillie du plan de la pièce, au voisinage du deuxième bord droit 84. Ces bossages visent à assurer la mise à la terre de la pièce de tôle pliée, amenée à stopper les ondes électromagnétiques générées dans la zone de confinement, sur le capot.

La pièce de tôle est avantageusement réalisée en acier inoxydable, intéressant ici pour avoir une bonne élasticité de la pièce au niveau des bossages pour faciliter le contact de la pièce avec le capot au niveau de la rigole, et pour qu'il n'y ait pas d'oxydation de la pièce de tôle.

La hauteur de l'élément rapporté, jouant rôle de pièce de fermeture, c'est-à-dire la distance entre le premier bord porteur des moyens de fixation et le deuxième bord plan, est légèrement inférieure à la distance entre le plan de support de la carte de circuits imprimés et le fond du logement au niveau de la rigole. De la sorte, on laisse un passage d'air entre le fond du logement et l'élément rapporté jouant le rôle de pièce de fermeture de l'ouverture de la zone de confinement.

On va maintenant décrire plus en détails la coopération de la carte de circuits imprimés, du logement du capot et de la pièce de fermeture de la zone de confinement.

On monte la pièce de tôle sur la carte de circuits imprimés, en glissant les languettes 86 de la pièce de tôle dans les lumières 40 formées au voisinage d'un bord de la plaque. On pousse la carte en butée contre la plaque, de sorte que les languettes dépassent de l'autre côté de la plaque et qu'elles puissent être rabattues contre la face de la plaque opposée à la pièce de tôle. Celle-ci est ainsi retenue par la carte de circuits imprimés et l'ensemble peut être utilisé pour être logé entre le carter support du réflecteur et le capot formant les moyens d'échange thermique.

Pour faciliter le montage, on pose la carte de circuits imprimés en recouvrement de la cavité 22 formée dans le carter support, avec la face de la carte porteuse de la diode tournée vers le carter support et donc l'élément rapporté tourné à l'opposé du carter support. On fait correspondre les moyens d'indexage complémentaires pour assurer la position correcte de la carte de circuits imprimés, dans laquelle la diode électroluminescente est en regard de la cavité, apte à émettre des rayons à travers le carter support en direction des moyens de déviation optique.

On rapporte ensuite le capot en recouvrement du logement 14 du carter support, un joint étant logé au préalable entre les parois annulaires concentriques. Là encore, on fait coopérer les moyens d'indexage complémentaires pour amener le capot contre la carte de circuits imprimés, jusqu'à ce que la plaque soit au contact des parois de confinement ainsi que des faces supérieures du canon central et des différents moyens d'indexage. Les composants électroniques, en saillie de la plaque, prennent place dans la zone de confinement délimitée par les parois du capot et par la pièce de fermeture. On pourra prévoir que certains composants soient disposés sur la plaque de sorte qu'ils se situent de l'autre côté de la paroi transversale, vers l'extrémité longitudinale arrière, mais on s'assurera que les composants électroniques générant les plus grosses perturbations électromagnétiques soient logés dans la zone de confinement. La position de la plaque est définie par la coopération des moyens d'indexage, et dans cette position, les murets prolongeant en saillie les parois latérales de confinement s'étendent en regard de la carte de circuits imprimés. Ces murets bloquent la diffusion latérale des ondes électromagnétiques, tandis que la paroi transversale sur laquelle repose la carte de circuits imprimés bloque la diffusion longitudinale de ces ondes vers l'arrière.

Lors de cette mise en place, l'extrémité de la pièce de tôle est logée dans la rigole, avec les bossages qui se déforment pour pénétrer dans cette rigole en assurant un contact avec le bord du logement. Il est en effet plus intéressant que les bossages soient au contact du bord du logement plutôt que de la paroi additionnelle, qui tient surtout le rôle d'une chicane de déviation des ondes électromagnétiques.

Le capot est ensuite vissé sur le carter support et la carte de circuits imprimés est ainsi d'une part enfoncée dans le siège formé à cet effet par les parois latérales de confinement et d'autre part plaquée contre la paroi transversale, pour rendre hermétique la zone de confinement à l'exception de l'ouverture laissée à l'extrémité longitudinale avant.

Les ondes électromagnétiques émises lors du fonctionnement de la diode électroluminescente sont confinées et ne peuvent s'échapper que par l'extrémité longitudinale avant. La paroi additionnelle formée en saillie de la paroi de fond s'étend en regard du deuxième bord de l'élément rapporté et elle empêche donc les ondes de passer directement entre ce deuxième bord et la paroi de fond de la rigole, alors qu'il existe un jeu de montage entre ce bord et la paroi de fond rendant la fermeture par l'élément rapporté non étanche, ce qui permet par ailleurs un refroidissement de la zone de confinement par un passage d'air.

Les ondes électromagnétiques s'échappant par l'extrémité longitudinale avant et bloquées par la paroi additionnelle entrent massivement en contact avec la pièce de tôle, qui empêche leur diffusion à l'extérieur de la zone de confinement. Le très faible pourcentage de ces ondes s'échappant de la zone de confinement par une succession de réflexion pour passer d'une part entre la paroi additionnelle et la pièce de fermeture, puis entre cette pièce de fermeture et la paroi de fond, et enfin entre cette pièce de fermeture et le bord définissant le logement, est ainsi acceptable. Il est particulièrement intéressant que de l'air puisse réaliser le cheminement inverse pour permettre une aération de la zone de confinement, là ou une zone de confinement rendue entièrement étanche par la présence de parois de confinement délimitant intégralement la zone ne permet pas cet apport d'air extérieur.

Dans le deuxième mode d'utilisation, l'ouverture axiale de la zone de confinement n'est pas fermée, aucun élément n'étant rapporté entre la carte de circuits imprimés et le capot. On comprend que des ondes électromagnétiques peuvent s'échapper par cette ouverture et qu'il convient de privilégier ce mode d'utilisation lorsque les composants électroniques soudés sur la carte de circuits imprimés sont peu générateurs de perturbations électromagnétiques, ou lorsque la disposition du module lumineux par rapport à l'habitacle du véhicule, ou l'orientation de l'ouverture axiale, permet de ne pas tenir compte de l'impact de ces ondes électromagnétiques. Par exemple, il pourra être intéressant de privilégier l'orientation du module lumineux dans le véhicule de sorte que l'ouverture de la zone de confinement soit tournée à l'opposé de l'habitacle, de manière à pouvoir se passer plus facilement de la présence de la pièce de fermeture.

On va maintenant décrire une variante de réalisation, illustrée sur les figures 11 et 12, dans laquelle on réalise un équivalent de l'élément rapporté par une paroi 90 venue de matière avec le carter support 106, porteur des moyens de déviation optique 104.

Le capot 112 est le même, la zone de confinement 152 restant inchangée avec une ouverture aménagée au niveau de l'extrémité longitudinale avant. La carte de circuits imprimés 133 est sensiblement moins longue dans la dimension longitudinale, de sorte qu'elle ne recouvre pas la rigole 178 aménagée au niveau de cette ouverture par la présence de la paroi additionnelle 176. C'est une paroi montante 90 qui s'étend en saillie perpendiculaire du carter support 106 qui joue le rôle de la pièce de fermeture. La hauteur de cette paroi montante est déterminée pour s'étendre en regard de la paroi de fond de la rigole lorsque le capot est rapporté sur le carter support, tel qu'illustré sur la figure 11. La fonction reste la même que précédemment, à savoir bloquer la diffusion vers l'extérieur du capot de perturbations électromagnétiques. La paroi est avantageusement revêtue d'une couche métallique, par exemple par aluminiage. Elle est conformée pour être connectée électriquement au capot ou à tout autre type de support de carte.

Ainsi, grâce au dispositif d'atténuation de perturbations électromagnétiques selon l'invention, on peut adapter la zone de confinement à différents cas pratiques, qu'il y ait ou non une pièce de fermeture en fonction de l'orientation et de la position dans le véhicule de ce dispositif, et que la pièce de fermeture soit prévue d'origine dans le carter support ou bien qu'elle soit un élément rapporté.

Une autre variante de réalisation est illustrée sur la figure 13, selon laquelle la pièce de fermeture est connectée électriquement à une surface métallique du réflecteur. On renforce ainsi l'atténuation par la pièce de fermeture des perturbations électromagnétiques générées par ledit au moins un composant électronique. Cette surface métallique du réflecteur peut être une surface réfléchissante du réflecteur, notamment celle destiné à renvoyer les rayons lumineux provenant de la source lumineuse du module lumineux. Cette surface peut par exemple être une couche métallique déposée sur un matériau, notamment par aluminiage. Dans la variante illustrée sur la figure 13, les languettes 286 présentent une première patte 92 adaptée à assurer le maintien de l'élément rapporté 234 par rapport à la carte de circuit imprimés 233 (le support de carte n'étant ici pas représenté) et une deuxième patte 94 adaptée à être connectée électriquement à une surface métallique du réflecteur. La deuxième patte est ici introduite dans une ouverture 96 spécifique pour faciliter la mise en contact de l'élément rapporté et de la languette. On comprend que la languette pourrait présenter une forme et des dimensions autres pour entrer en contact avec d'autres parties du réflecteur.

La description qui précède explique clairement comment l'invention permet d'atteindre les objectifs qu'elle s'est fixés et notamment de proposer un dispositif d'atténuation de perturbations électromagnétiques qui permette une grande modularité. On décide avantageusement, selon l'orientation et la distance par rapport à l'habitacle de la source lumineuse et des composants électroniques portés par la carte de circuits imprimés et générateurs d'ondes électromagnétiques, si on place ou non une pièce de fermeture pour fermer la zone de confinement. Dans le premier mode de réalisation où la pièce de fermeture est formée par un élément rapporté, on se permet en outre d'avoir un dispositif réalisé en deux matières, avec la réalisation plastique de la quasi-totalité du dispositif, de sorte que la réalisation par moulage permet de réaliser un design spécifique en fonction de l'implantation des composants, seule la pièce de fermeture rapportée étant réalisée par une pièce de tôle.

Un autre avantage principal du dispositif selon l'invention est de fournir une fermeture de la zone de confinement qui ne soit pas étanche pour la correcte ventilation de l'intérieur de la zone de confinement. La présence de la pièce de fermeture, qu'elle soit venue de matière ou un élément rapporté, et la présence de chicanes formées dans le logement recevant la carte de circuits imprimés et la pièce de fermeture, permettent d'éviter les fuites électromagnétiques, sans pour autant empêcher la circulation d'air qui permet le refroidissement de l'intérieur de la zone de confinement.

Bien entendu, diverses modifications peuvent être apportées par l'homme du métier aux structures du module lumineux, qui viennent d'être décrites à titre d'exemples non limitatifs.

## Revendications

1. Dispositif d'atténuation de perturbations électromagnétiques dégagées par au moins un composant électronique, disposé sur une carte de circuits imprimés (33) qui est montée sur une première face (31) d'un support de carte (12) et qui est porteuse d'au moins une diode électroluminescente pilotée par le au moins un composant électronique pour l'émission de rayons lumineux, ledit dispositif comportant une cage de confinement des ondes électromagnétiques disposée autour d'au moins ledit composant électronique,
**caractérisé en ce que** la cage est formée partiellement par des parois (62, 64) venues de matière avec ladite première face du support de carte et sur lesquelles repose la carte de circuits imprimés, de manière à délimiter dans ledit support de carte et sur la carte de circuits imprimés une zone de confinement des ondes (52), ladite zone de confinement présentant une ouverture (74), selon une première direction, apte à être obturée, selon les besoins d'atténuation du dispositif, par une pièce de fermeture (34, 80, 90) distincte desdites parois.

2. Dispositif selon la revendication 1, **caractérisé en ce que** les parois de confinement comportent deux parois latérales (64) et une paroi transversale (62) les reliant à une extrémité longitudinale, délimitant entre elles ladite zone de confinement (52) avec ladite ouverture (74).

3. Dispositif selon la revendication 2, **caractérisé en ce que** la paroi transversale (62) présente une extrémité libre sensiblement plane sur laquelle la carte de circuits imprimés (33) vient en appui de sorte qu'elle s'étend de part et d'autre de la paroi transversale.

4. Dispositif selon la revendication 3, **caractérisé en ce que** la carte porte une pluralité de composants électroniques qui sont répartis, en fonction de leur capacité à produire des perturbations électromagnétiques, de part et d'autre de ladite paroi transversale (62).

5. Dispositif selon l'une des revendications 2 à 4, **caractérisé en ce que** les parois latérales (64) présentent une extrémité libre telle qu'un muret (72) prolonge le côté de la paroi latérale opposée à la zone de confinement (52), en formant un siège de réception d'une extrémité latérale de la carte de circuits imprimés (33).

6. Dispositif selon l'une des revendications précédentes, **caractérisé en ce que** le support de carte (12) est creusé au moins dans la zone de confinement (52), de sorte qu'une bordure (53) s'étende le long de l'ouverture (74) de ladite zone de confinement.

7. Dispositif selon la revendication 6, **caractérisé en ce que** la paroi de fond de la zone de confinement (52) comporte une paroi additionnelle (76) qui s'étend en regard de la bordure (53) à proximité de l'ouverture (74), de sorte qu'une rigole (78) court le long de la bordure entre celle-ci et la paroi additionnelle.

8. Dispositif selon l'une des revendications précédentes, **caractérisé en ce que** la diode est disposée sur une face externe de la carte de circuits imprimés (33), tournée à l'opposé du support de carte, tandis que le au moins un composant électronique est disposé sur la face interne de la carte, tournée vers le support de carte (12), de manière à être logé dans la zone de confinement (52).

9. Dispositif selon l'une des revendications précédentes, **caractérisé en ce que** le support de carte (12) porte sur sa face externe des moyens d'échange thermique (10).

10. Dispositif selon l'une des revendications précédentes, **caractérisé en ce que** ledit support de carte est un capot de fermeture.

11. Module lumineux pour l'éclairage et/ou la signalisation d'un véhicule automobile, **caractérisé en ce qu'**il comporte un dispositif d'atténuation de perturbations électromagnétiques selon l'une des revendications précédentes, ladite au moins une diode électroluminescente étant apte à émettre des rayons lumineux vers des moyens de déviation optique (4) pour que ces rayons soient dirigés vers une face de sortie du module, ledit module comportant un carter support (6) aménagé pour loger ladite carte de circuits imprimés (33) pour le bon positionnement de la diode.

12. Module lumineux selon la revendication 11, **caractérisé en ce qu'**une pièce de fermeture (34, 80, 90) obture ladite ouverture (74).

13. Module lumineux selon la revendication 12, **caractérisé en ce que** la pièce de fermeture (34, 80, 90) est distincte desdites parois (62, 64).

14. Module lumineux selon la revendication 12 ou 13, **caractérisé en ce que** la pièce de fermeture est un élément rapporté (34) sur la carte de circuits imprimés (33) de manière à s'étendre entre la carte et le support de carte (12).

15. Module lumineux selon la revendication 14, **caractérisé en ce que** la pièce de fermeture est adaptée à être fixée à une première extrémité à la carte de circuits imprimés (33) et à être logée à l'autre extrémité dans une rigole (78) formée dans ledit support de carte (12).

16. Module lumineux selon la revendication 15, **caractérisé en ce que** le support de carte (12) est creusé de sorte qu'il forme un logement pour le au moins un composant électronique pour le pilotage du fonctionnement de ladite au moins une diode, la rigole (78) étant formée par une bordure (53) dudit logement et une paroi additionnelle (76) qui s'étend sensiblement parallèlement à ladite bordure.

17. Module lumineux selon la revendication 15 ou 16, **caractérisé en ce que** la hauteur de la pièce de fermeture (34, 80, 90) est telle que cette pièce de fermeture s'étende dans la rigole (78) sans contact avec la paroi de fond de la rigole.

18. Module lumineux selon la revendication 17, **caractérisé en ce que** ladite pièce (80) comporte des bossages (88), qui s'étendent en saillie du plan de la pièce sensiblement au voisinage de l'extrémité apte à être logée dans la rigole (78).

19. Module lumineux selon l'une des revendications 12 à 18, **caractérisé en ce que** ladite pièce de fermeture est une pièce de tôle pliée (80).

20. Module lumineux selon la revendication 19, **caractérisé en ce que** la pièce de tôle pliée (80) comporte des languettes (86) qui prolongent, dans le plan de la pièce, le bord de la pièce apte à être au contact de la carte de circuits imprimés (33), lesdites languettes étant aptes à coopérer avec des lumières (40) formées dans la carte de circuits imprimés.

21. Module lumineux selon la revendication 20, **caractérisé en ce que** les languettes (86) sont connectées électriquement à une surface métallique du carter support.

22. Module lumineux selon l'une des revendications 19 à 21, **caractérisé en ce que** la pièce de tôle pliée (80) est réalisée en acier inoxydable.

23. Module lumineux selon l'une des revendications 12 à 13, **caractérisé en ce que** la pièce de fermeture est une paroi (90) venue de matière avec le carter support (6).

24. Module lumineux selon l'une des revendications 11 à 23, **caractérisé en ce que** l'ouverture (74) est tournée dans le même sens que celui d'émission de la lumière par ledit module lumineux.

25. Module lumineux selon l'une des revendications 11 à 24, **caractérisé en ce que** le dispositif d'atténuation des perturbations électromagnétiques est un dispositif selon l'une des revendications 1 à 10.

26. Module lumineux selon l'une des revendications 11 à 25, **caractérisé en ce que** ledit support de carte est un capot permettant de fermer ledit carter (6).

27. Module lumineux selon la revendication 26, **caractérisé en ce que** ledit carter (6) est le boîtier dudit module, le boîtier comprenant un premier orifice fermé par une glace de fermeture formant ladite face de sortie du module, et un deuxième orifice fermé par ledit capot.

28. Module lumineux selon la revendication 27, **caractérisé en ce que** ledit carter (6) comporte une paroi interne constituant une paroi réfléchissante, lesdits moyens de déviation optiques (4) comprenant ladite paroi réfléchissante ou étant constitués par ladite paroi réfléchissante.
